**Europäisches Patentamt**

**European Patent Office**

**Office européen des brevets**

(19)

(11)　**EP 1 727 297 A1**

(12)　**EUROPEAN PATENT APPLICATION**

(43) Date of publication:
　　**29.11.2006　Bulletin 2006/48**

(51) Int Cl.:
　　**H04B 7/02** (2006.01)

(21) Application number: **05011389.3**

(22) Date of filing: **25.05.2005**

(84) Designated Contracting States:
　　**AT BE BG CH CY CZ DE DK EE ES FI FR GB GR
　　HU IE IS IT LI LT LU MC NL PL PT RO SE SI SK TR**
　　Designated Extension States:
　　**AL BA HR LV MK YU**

(71) Applicants:
　　• **SIEMENS AKTIENGESELLSCHAFT**
　　　**80333 München (DE)**
　　• **Fraunhofer-Gesellschaft zur Förderung der
　　　angewandten Forschung e.V.
　　　80686 München (DE)**

(72) Inventors:
　　• **Chen, Haifeng
　　　14050 Berlin (DE)**
　　• **Pohl, Volker
　　　10407 Berlin (DE)**
　　• **Jungnickel, Volker, Dr.
　　　10318 Berlin (DE)**
　　• **Weber, Tobias, Dr.
　　　67731 Otterbach (DE)**
　　• **Zirwas, Wolfgang
　　　82194 Gröbenzell (DE)**

(54)　**Method and Terminal for reducing interference in a radio communication system**

(57)　According to the invention, a method is proposed for reducing interference in a radio communication system, wherein a user terminal (MS) is equipped with at least two antennas for receiving at least two signal streams (stream 1, stream 2) using a space-time processing technique.

# FIG 2

**Description**

The invention relates to a method and components of a radio communication system, including a receiver for radio stations and terminals, for reducing interference in such systems.

In radio communication systems such as UMTS (Universal Mobile Telecommunication System) which is standardised by the 3GPP (Third Generation Partnership Project), information such as speech, video data etc. is transmitted over an air interface between base stations of the system and mobile or fixed user terminals.

In the framework of the UMTS standardisation, also the so called High Speed Downlink Packet Access (HSDPA) is being standardised as a new channel for high data rate packet data transmission in downlink. Reference is thereby made to the technical specification 3GPP TS 25.308 V6.3.0 (2004-12) "High Speed DownlinkPacket Access (HSDPA); Overall description; Stage 2 (Release 6)".

In cellular radio systems with frequency reuse factor 1, such as systems based on the above mentioned UMTS standard, the performance of the down-link detection is limited by the interference between adjacent cells using the same frequency bands. The overall capacity of the system is therefore limited by intercell as well as intracell interference.

One approach to remove such intercell interference would be the application of a coordinated pre-processing of signals before being transmitted from different base stations. This pre-processing technique is also known as joint transmission. In this way, the received signals from one base station could be maximized, whereas at the same time the interference caused by signals from an adjacent second base is reduced. Nevertheless, for the implementation of joint transmission techniques, instantaneous channel state information must be available at the transmitter. Such instantaneous information is not easy to obtain in UMTS W-CDMA systems because of the application of frequency-division duplex (FDD), i.e. the usage of different frequency bands for uplink and downlink transmission, with, as a consequence, different channel properties for uplink and downlink. Moreover, the jointly processed data signals would have to be transferred from a common processing unit to the distant base stations, which would cause significant additional deployment costs for optical fibre or microwave links between the base stations as well as high signalling load.

A second way frequently used in UMTS WCDMA systems is the suppression of undesired inter-cell interference by the system-inherent processing gain, which renders the system more robust to any kind of interference. But for the HSDPA feature, wherein a user may be assigned multiple or even all available codes in a frequency band and wherein the transmitter power is shared among the codes, the processing gain is reduced again proportional to the number of used codes, and as a consequence, the system becomes less robust towards inter-cell interference.

It is thus an object of the invention to provide mechanisms and means to reduce interference at a receiver. This object is resolved by the features of the independent claims. Further advantageous feature are given in dependent claims.

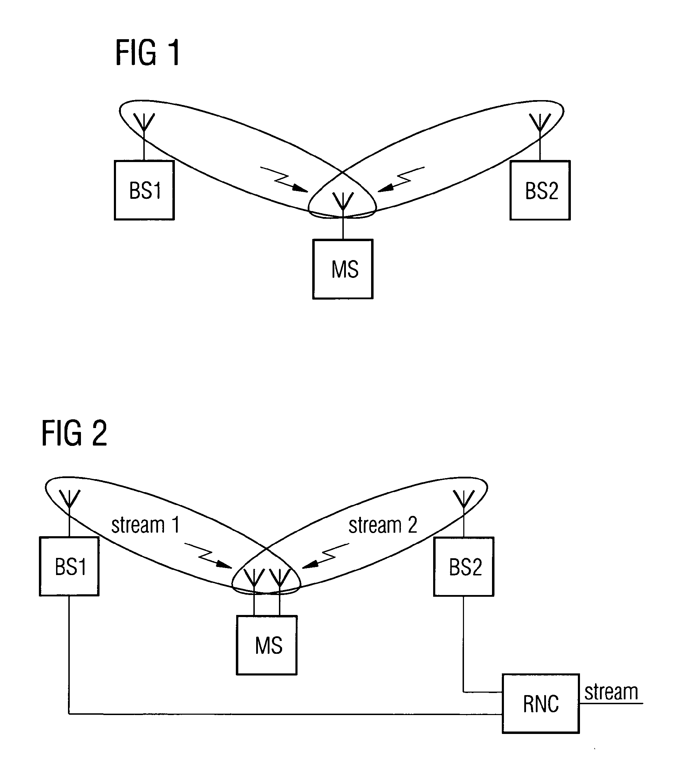

In the following, the inventive concept is described with reference to figures 1 to 8.

In FIG 1, a standard situation is shown wherein a mobile terminal MS (Mobile Station) is located in an area where it receives signals from two adjacent base stations BS1, BS2. In such situation, if the signals transmitted by the first base station BS1 are signals dedicated to the mobile terminal MS, the signals received at the mobile terminal MS from the second base station BS2 interfere with the signals received from the first base station BS1, the so called intercell interference.

According to the invention and as shown in FIG 2, the mobile terminal MS uses at least two receive antennas, which of course may also be used for transmission. In addition, the two adjacent base stations BS1, BS2 in FIG 2 are be synchronised to each other. Synchronised operation could be realised using phase-locked local oscillators at the two base stations, e.g. by locking the oscillators of the physically distant base stations to a common low-frequency reference signal distributed over standard telephone lines or specific wireline or wireless connections. Several solutions for synchronising base stations are known in the art. Such synchronisation would of course not present an issue in cases where two adjacent cells or sectors of a cell are served by the same base station.

In order to enable the mobile terminal MS to distinguish signals from the two base stations, the base stations frequently transmit signals, e.g. orthogonal sequences in the preamble or specific training or pilot sequences. From reception of these signals, the mobile terminal may identify the individual channel coefficients between the transmit antennas at the base stations and each of its receive antennas. The base stations' signals overlap randomly at the multiple mobile terminal antennas due to the independent propagation paths.

Based on the knowledge of the channels to each base station, the mobile terminal can make use of a so called space-time processing technique, also known as spatial multiplexing, to separate the signals received from both base stations. This could be realised by a so called MIMO (Multiple Input Multiple Output) RAKE receiver. With a sophisticated detection technique, e.g. the so called maximum-likelihood detection, signals can be perfectly distinguished. When using alternative techniques with reduced complexity, e.g. the so called minimum mean-square error estimator (MMSE), the system's performance may be reduced but would still provide better performance than current approaches described above.

Now, the received signals from the second base station can be identified by the mobile terminal as being interfering signals in case the same resources are assigned to another user in the cell of the second base station.

According to a second aspect of the invention, as also disclosed in FIG 2, a data stream arriving at the base station controller RNC (Radio Network Controller) of the radio communication system is split up and forwarded to the two adjacent base stations BS1, BS2. With the above mentioned mechanisms according to the invention, the mobile terminal MS is now enabled to receive the data streams 1 and 2 from the two base stations BS1 and BS2 in parallel, even when using the same ressouces. The signals received from the second base station BS2 are thus no interfering signals anymore. In case the base stations are not connected to the same base station controller, the splitting up of the data stream towards the mobile terminal could also be made in another component further up in the hierarchy of the radio communication system, e.g. in the mobile switching center (MSC) or packet data gateway (SGSN, GGSN).

According to a further aspect of the invention, the spatial multiplexing can also be used to conduct an inter-cell handover, e.g. from the first base station BS1 to the second base station BS2, or from a first cell (or sector) to another cell (or sector) of the first base station. In this case, the two data streams 1 and 2 are maintained in parallel, until the link to one of the base stations is released due to degrading channel quality.

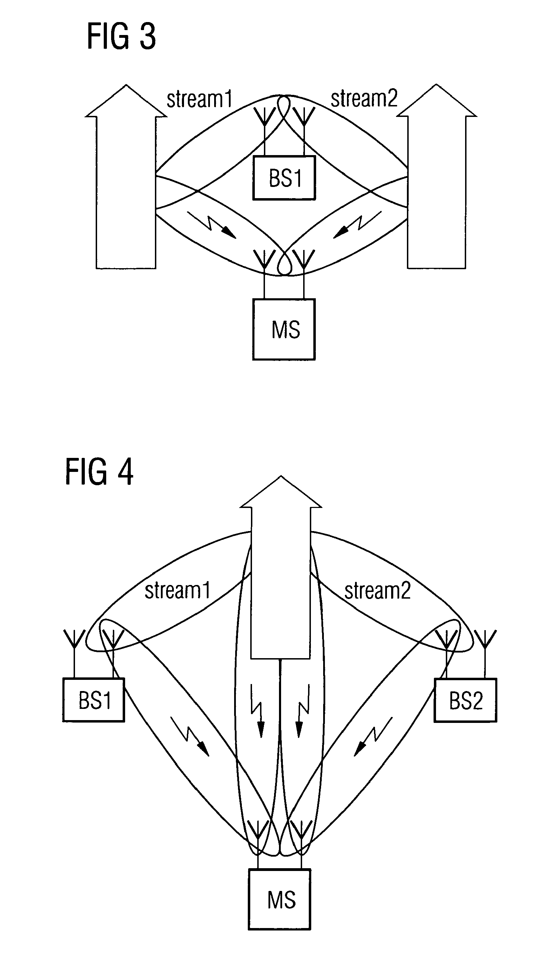

According to another aspect of the invention, the base stations are also provided with multiple antennas. In this case, as shown in FIG 3, the first base station BS1 is enabled to support the transmission of multiple parallel streams to the mobile terminal in a single link but with double capacity.

In situations where the user of the mobile terminal MS approaches the boundary of the cell of the first base station BS1, such spatially multiplexed link with enhanced capacity may no longer be upheld because of rising inter-cell interference. In such a situation, as shown in FIG 3, when the mobile terminal MS experiences multi-cell interference from second base station BS2, one of the streams is handed over from the first base station BS1 to the second base station BS2. The mobile terminal MS detects both streams as disclosed in FIG 2, again using the spatial multiplexing capabilities of the MIMO-RAKE detector.

Each of the base stations BS1, BS2 may use the multiple antennas as well to improve the overall range of it's transmissions by using transmit diversity techniques, e.g. the so called space-time coding. This way, high data rates may also be supported at the cell boundary, where the signal is weaker and interference becomes stronger.

The signal streams from both base stations BS1 and BS2 are thus detected simultaneously at the mobile terminal MS. The former inter-cell interference is now used for transmitting a second data stream in parallel to the mobile terminal from the second base station BS2. Hence, the inter-cell interference is converted into useful signal, provided that the mobile terminal uses at least two receive antennas. When such a mobile terminal moves from one cell to a neighbouring one, the first stream is softly switched off, while the second stream is softly switched on. This switching of streams may for example be effected using a narrow-band feed-back channel, over which measurements of the individual channel quality of the streams is reported to each of the base stations or just to one, the currently serving, base station. At both base stations, the transmission power, the modulation as well as the number of simultaneously assigned codes are assigned based on channel quality measurements effected by the mobile terminal. The two downlink data streams are de-multiplexed at the radio network controller RNC, as shown in FIG 2, wherein the radio network controller maintains two links simultaneously during an inter-cell handover. With the proposed method, the same frequency and code resources may be used in both cells involved in the handover procedure.

For using the above principles for the HSDPA feature of UMTS, an adaption to the multi-code WCDMA air interface is required. Advantageously, because of the signals streams from two base stations, the intra-cell interference as well as the spatial interference may jointly be reduced. Intra-cell interference in WCDMA systems arises from the fact that codes are no longer orthogonal after passing a multi-path channel and that there is additional inter-symbol interference due to the missing guard time. A receiver structure suitable for this purpose is described in the following. It may be noted that this particular receiver would require shorter scrambling sequences for the downlink transmission as currently defined in the UMTS standard.

In the following, a proposal for a receiver structure for realising spatial multiplex detection is described in more details.

The extension of the WCDMA system to include multiple transmit and multiple receive antennas is ongoing in the 3rd Generation Partnership Project (3GPP), where a multiple-input multiple-output (MIMO) air interface is defined for increased link- and system capacity in mobile radio systems. A basic challenge for this extension is how to design simple but efficient receiver structures to cope with the spatial interference (SI) due to the spatially multiplexed data streams in addition to the code- and inter-symbol interference (CI and ISI, respectively) due to the multi-path characteristics of the channel. For down-link applications, complexity is a critical issue, since the receiver is placed in a wireless handset. Currently, the chip-level equalizer (CLE) is preferred, which cancels the interference before de-spreading the codes [1]. But such a space-time equalizer is rather complex and one may look for alternatives.

The RAKE receiver is well known for its moderate complexity. So, a MIMO extension to remove the SI was investigated under idealised conditions. But when the so extended RAKE is operated under true WCDMA conditions (OVSF codes, no guard time), the performance is substantially degraded due to the above mentioned multi-path effects [2]. Additional interference cancellation after the RAKE is hence mandatory for practical applications.

A first step into that direction is to remove the CI. Even for a single code, the autocorrelation is not perfect and CI rises (see [2]). It becomes the stronger the more codes are used since the codes are no longer orthogonal after the transmission over a multi-path channel. When the ISI can be ignored, as with relatively long sequences or when a guard time is introduced between consecutive symbols, the structure of the interference cancellation is well known. The transmission can then be described by an equivalent matrix-vector channel model in the space-code domain, and an independent decision can be made for each symbol period. For instance, the interference can be jointly removed for all codes and antennas with a linear multi-user detector after the RAKE [3]. Further extensions use a sorted successive interference cancellation which is a WCDMA version of the well-known V-BLAST algorithm (see [4]).

But particularly for data applications, shorter codes are desired and the shorter the codes the stronger the ISI becomes. With a code length of 16 targeted in the high-speed down-link packet access (HDSPA), the ISI limits the performance even if the CI is removed, at least at high system load.

According to the inventive concept, the close relationship between the maximum-likelihood sequence estimator (MLSE) and the RAKE is used to derive an effective channel model for the received signals after the RAKE which includes SI, CI and ISI. It is assumed that the RAKE output has a multi-path nature, in general.

Therefore, it is proposed to use a Wiener filter after the RAKE to jointly remove SI, CI and ISI. The performance of this receiver is investigated numerically and it is found to be identical with the CLE with subsequent de-spreading. An advantage of the RAKE is that the complexity scales more directly with the resources used in the space-code domain. A necessary change in the WCDMA down-link standard is also noted, concerning the scrambling, which enables an efficient implementation of the enhanced interference cancellation.

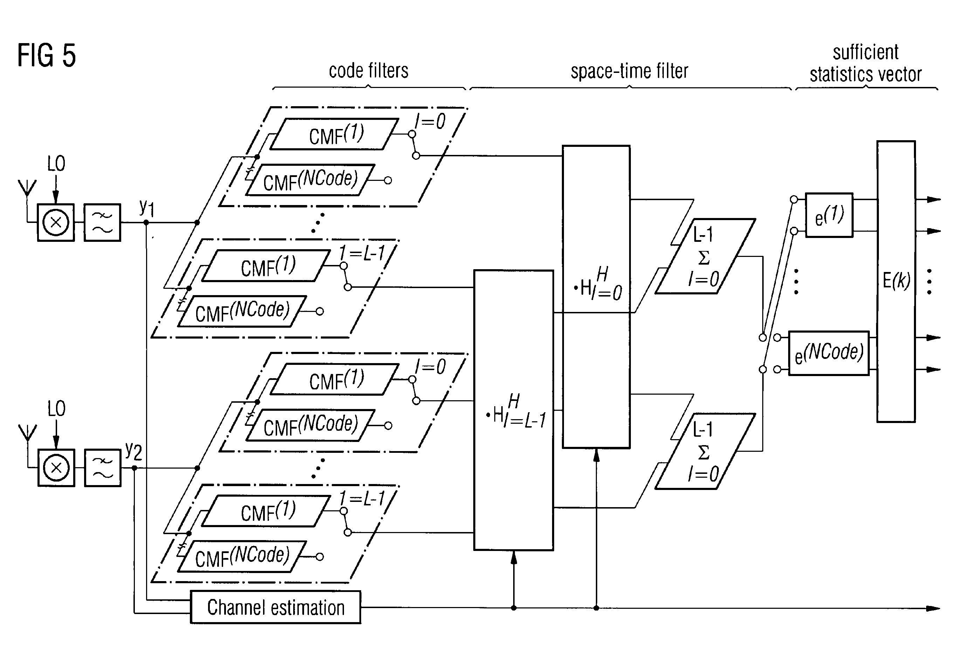

The mathematical structure of the receiver is derived below. First, a graphical representation of the receiver is used. FIG 5 shows the first receiver stage, a multi-code space-time RAKE, forming the sufficient statistics vector for each code. It comprises of a bench of code-matched filters (CMF): one for each code and each multi-path component. One result is that the reference sequences in the code filters must be shifted cyclically. The CMFs are followed by a space-time filter which is reused for all codes. The sufficient statistics vectors for each symbol interval denoted by $k$ are stacked in the vector $\mathbf{E}(k)$.

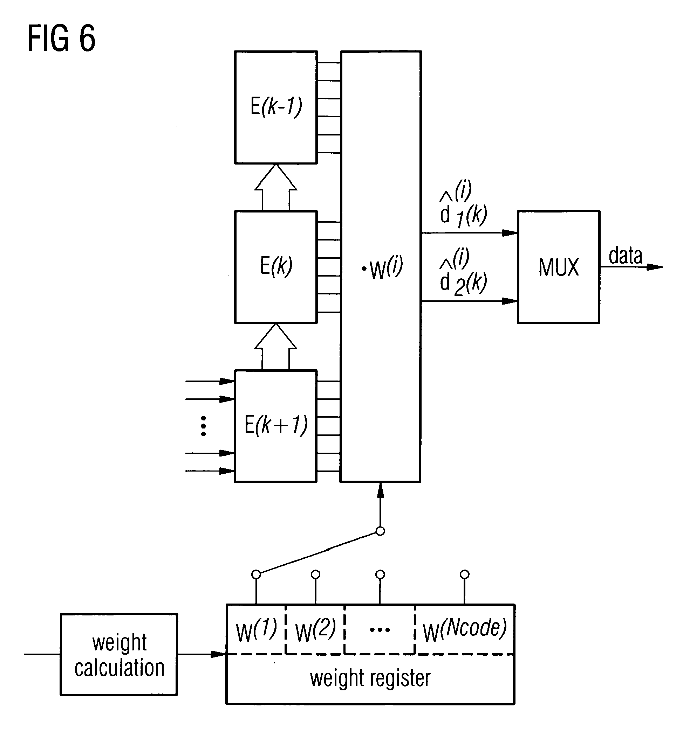

The second receiver stage is shown in FIG 6. When the impulse response is shorter than one WCDMA symbol, it is sufficient to operate the Wiener filter over three symbol periods due to the previous, current and following symbol.

Symbol by symbol, the sufficient statistics vector $\mathbf{E}$ is formed and stored in a dedicated shift register bank. A matrix-vector product of the $\mathbf{E}$ vectors in three subsequent symbol intervals is then formed with the weight matrix corresponding to the current code index. The weights are computed from the channel estimates by inserting the code tensor elements (A.20) into the code interference matrices $\mathbf{G}_{ij}$ from (A.11) which are then arranged in the matrices $\Gamma_{-1}$ and $\Gamma_0$. This gives the covariance matrix (A.25) and the filter coefficients (A.26).

In a fictive real-time implementation, the weight matrices for each code are stored in corresponding memory pages. A dedicated matrix-vector multiplication unit is then used and the matrices from the memory pages are successively used, corresponding to the current code index. Note that the original data vector is restored after the matrix-vector multiplication including some colored noise. These signals can be fed into the channel decoder to reconstruct the original data stream.

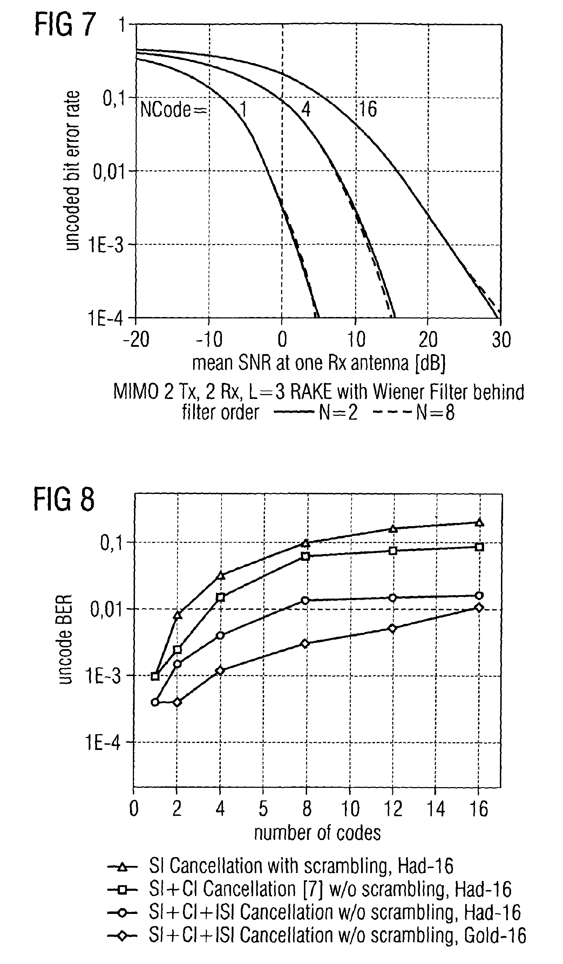

The performance is investigated numerically, using a Rayleigh channel model with independently and identically distributed (i.i.d.) random coefficients for L=3 paths having equal mean power. FIG 7 shows the performance of the MIMO RAKE with the enhanced interference cancellation, depending on the number of codes Ncode. It is shown that, despite using the RAKE architecture, interference-free signal reception is achieved under realistic WCDMA conditions, at least in a single cell scenario. The previously observed error floors due to CI and ISI (see [2]) have disappeared which is the effect of the Wiener filter after the RAKE jointly cancelling the SI, CI and ISI. Moreover, the performance is equal to the CLE.

With a single code, the diversity order is $n_r \cdot L - n_t + 1 = 5$ in the numerical example ($n_r = n_t = 2$, $L = 3$). But due to the linear interference cancellation, a fraction of the diversity is lost when the full number of codes is used. As already indicated in FIG 6, the Wiener filter must operate over at least 3 symbol intervals (N=2). Further increasing the number of taps (i.e. N=8) does not noticeably improve the performance.

FIG 8 shows the bit error rate versus number of codes with an SNR of 3 dB/code. In this figure, the potential WCDMA down-link capacity gain is compared with other interference cancellation techniques (the SNR is increased according to the number of codes).

The proposed SI cancellation, combined with a scrambling technique (see [2]) allows the simultaneous use of only 2 Hadamard codes at the targeted bit error rate of $10^{-2}$. The linear space-code interference cancellation (SI+CI) described in [3] results in a minor improvement (up to 3 codes) since the ISI becomes significant when multiple short codes are used.

With the Wiener filter, up to 6 codes can be supported when the Hadamard codes are used without any scrambling. When the scrambling is included and matched to the spreading code length, even larger gains can be expected. The best practical case may be the use of extended Gold sequences, with which the full number of codes is supported within the given link margin and error rate target.

Effort estimation can be distinguished into "symbol-rate" and "channel rate" operations. The interference cancellation operates at the symbol rate. It requires $3 \cdot n_t \cdot N_{Code}$ complex multiplications operated in parallel once per code and symbol, which gives a solid number in a fully loaded system. The CLE must fully equalize the channel already with a single code. Some interference can be suppressed by the processing gain and less effort is possible at reduced load. But an equalization over three symbol intervals at full system load is needed to obtain the same performance as with the RAKE. The CLE requires $3 \cdot T \cdot n_r \cdot n_t$ complex multiplications, which is $n_r$ times the effort with the RAKE since $N_{Cde}=T$ at full load.

For the RAKE, a $(3 \cdot n_t \cdot N_{Code} \times 3 \cdot n_t \cdot N_{Code})$ matrix need to be inverted to calculate the weights (A.26). For the CLE, a $(n_r \cdot 3 \cdot T \times n_r \cdot 3 \cdot T)$ matrix must be inverted to obtain the filter coefficients at full load, so this effort is comparable when $N_{Code} = T$.

An advantage of the RAKE is that the effort scales more directly with the resources used in the space-code domain.

Consequently, we the RAKE receiver can be operated with the full number of codes and cancel the interference jointly using a Wiener filter, which is designed according to the two-path structure of the effective channel after the RAKE. Nevertheless, short scrambling sequences should be used to enable the application of this enhanced interference cancellation.

Both the performance and complexity are comparable with the chip-level equalizer, and it is a matter of taste of using either space-time or space-code signal processing to cancel the interference. More potential to reduce the terminal complexity can be expected from adaptive space-frequency techniques, as MIMO-OFDM.

The derivation of the RAKE from the MLSE criterion is reproduced in the following in detail to work out the influence of the ISI. It is assumed that the spatially multiplexed data streams are spread by reusing the same codes on all antennas. The transmitted vector-valued signal is given by the $(n_t \times 1)$ vector

$$\mathbf{x}(t) = \sum_{i=1}^{N_{Code}} c^{(i)}\left(t - \left\lfloor \frac{t}{T} \right\rfloor \cdot T\right) \cdot \mathbf{d}^{(i)}\left(\left\lfloor \frac{t}{T} \right\rfloor\right) \qquad (\mathrm{A.1})$$

where t is the continuous time, T is the symbol interval and $n_t$ is the number of transmit antennas. $N_{Code}$ denotes the number of simultaneously used codes at the base station disregarding the fact that the actual terminal may be assigned to only a fraction of these codes. The notation $\lfloor z \rfloor$ rounds z to the nearest integer less than or equal to z. It is valuable to model the ISI in this way, since the term $\lfloor t/T \rfloor$ in (A.1) points to the current symbol index $k$. The terms $c^{(i)}(t)$ and $\mathbf{d}^{(i)}$ are the waveform and the $(n_t \times 1)$ data symbol vector of the $i^{th}$ code, respectively.

A discrete-path continuous-time multi-path channel model is used for the MIMO transmission

$$\mathbf{y}(t) = \sum_{l=0}^{L-1} \mathbf{H}_l \cdot \mathbf{x}(t - l \cdot \tau) + \mathbf{v}(t) \qquad (\mathrm{A.2})$$

where the $(n_r \times 1)$ vector $\mathbf{y}$ contains the received signals at all antennas, $n_r$ the number of receive antennas, and the $(n_r \times n_t)$ matrices $\mathbf{H}_1$ contain the channel coefficients for the $1^{th}$ multi-path component. The $(n_r \times 1)$ vector $v$ denotes the i.i.d. noise and $\tau$ is the chip interval.

Now, a particular set of constellation vectors

$$\alpha = \left\{ \mathbf{d}_\alpha^{(1)}, \mathbf{d}_\alpha^{(2)}, \dots, \mathbf{d}_\alpha^{(Ncode)} \right\}$$

is transmitted in a given symbol interval. The MLSE criterion for that symbol reads

$$\hat{\alpha} = \arg\min_\alpha \int_a^b \left| \mathbf{y}(t) - \mathbf{y}_\alpha(t) \right|^2 dt \qquad (\mathrm{A.3})$$

where $\hat{a}$ denotes the most likely transmitted set. The limits of the integration in (A.3) are intentionally left open since they depend on whether a guard time is inserted or not. When it is used, the MLSE can be fully finished within a single symbol period. This leads to a closed-form solution for the optimal detector with moderate complexity. The integration is then confined to the limits $a=k\cdot T$ and b= $(k+1)\cdot T+ (L-1)\cdot\tau$ when it is assumed that the guard time $(L-1)\cdot\tau$ is matched to the number of multi-path components.

For WCDMA, the case where no guard time is used is of greater interest. The MLSE must then be defined over a longer sequence of data symbols. Each practical message has a well-defined start and stop at $t=a$ and $t=b$, respectively, but in practice the number of symbols in between can be so large that the MLSE becomes infeasible. In the following, it is assumed that the ISI comes only from the previous symbol period ($L\cdot\tau < T$). Then the limits $a=k\cdot T$ and $b=(k+1)\cdot T$ corresponding to the $k$th symbol are chosen and the influence of the previous symbol on the current sufficient statistics vector calculated (see below). For obtaining this vector, the same formalism is used as when a guard time would be used.

In this case, the expected signature of the received signal $\mathbf{y}_\alpha(t)$ is obtained by inserting the set of constellation vectors $\alpha$ into (A.1, A.2) and neglecting the noise. The optimization (A.3) is then reformulated as

$$\hat{\alpha} = \arg\max_{\alpha}\left(2\cdot\Re(A_\alpha) - B_\alpha\right) \qquad (A.4)$$

where the notation $\Re(\cdot)$ means the real value of a complex number. The terms $A_\alpha$ and $B_\alpha$ are given as

$$A_\alpha = \int_a^b y_\alpha^H(t)\cdot y(t)\,dt \qquad B_\alpha = \int_a^b \left|y_\alpha^H(t)\right|^2 dt \qquad . \qquad (A.5)$$

The superscript $^H$ denotes the conjugate transpose of a vector or a matrix. The well-known matched filter structure of the RAKE follows from $A_\alpha$, while $B_\alpha$ is due to the fact that different constellation vectors may result in different received energies. $A_\alpha$ can be expressed as

$$A_\alpha = \sum_{i=1}^{N_{Code}} \mathbf{d}_\alpha^{(i)H}\cdot\mathbf{e}^{(i)} \qquad (A.6)$$

where $\mathbf{e}^{(i)}$ is the ($n_t$ x1) sufficient statistics vector

$$\mathbf{e}^{(i)} = \sum_{l=0}^{L-1} \mathbf{H}_l^H \cdot \int_a^b c^{(i)*}\left(t - l\cdot\tau - \left\lfloor\frac{t-l\cdot\tau}{T}\right\rfloor\cdot T\right)\cdot \mathbf{y}(t)\,dt \qquad (A.7)$$

corresponding to the code with index (i). The sufficient statistics vectors for all codes are obtained as in FIG 5 and explained in the text.

Further calculus shows that the sufficient statistics vectors for a given code can be expressed as a linear combination of the data vectors corresponding to all codes as

$$\mathbf{e}^{(i)} = \sum_{j=1}^{N_{Code}} \left[ \sum_{l=0}^{L-1}\sum_{\lambda=0}^{L-1} \mathbf{H}_l^H \mathbf{H}_\lambda \int_a^b c^{(i)*}\left(t_l - \left\lfloor \frac{t_l}{T} \right\rfloor \cdot T\right) \cdot c^{(j)}\left(t_\lambda - \left\lfloor \frac{t_\lambda}{T} \right\rfloor \cdot T\right) dt \cdot \right]$$
$$\cdot \mathbf{d}^{(j)}\left(\left\lfloor \frac{t_\lambda}{T} \right\rfloor\right) + \mathbf{e}_v^{(i)}$$

$$(A.8)$$

where $t_\mu = t - \mu \cdot \tau$, and $\mathbf{e}_v^{(i)}$ is obtained from (A.7) by inserting only v(t) from (2) instead of y(t).

With the following idealized conditions, one arrives at the textbook form of the MIMO RAKE investigated in [1].

First, it is assumed that a guard time is inserted. The term $\lfloor (t-l\cdot\tau)/T\rfloor$ then always points to the current symbol index $k$. The CMFs contain a delayed reference sequence, as in the textbooks. This is compatible with the result stated below that cyclically shifted sequences are more helpful when no guard time is used. The guard time could be interpreted such that $L$-1 zeros are appended at the transmitter due to an extended spreading code. When a cyclic shift is applied to the so extended code, in effect the original code is shifted in time. In practice, the first condition avoids the ISI.

Second, perfect correlation between the codes is assumed. The integral in (A.8) then equals $T\cdot\delta_{ij}\cdot\delta_{1\lambda}$ where $\delta_{\mu v}=1$ for $\mu=v$ and $\delta_{\mu v}=0$ for $\mu\neq v$. So one obtains the simplest form of the MIMO RAKE discussed in [1]

$$\mathbf{e}^{(i)}(k) = \mathbf{G}\cdot\mathbf{d}^{(i)}(k) + \mathbf{e}_v^{(i)}(k)$$

with

$$\mathbf{G} = T\cdot\sum_{l=0}^{L-1} \mathbf{H}_l^H \cdot \mathbf{H}_l$$

$$(A.9)$$

resulting in an effective channel with $n_t$ inputs and outputs each. Obviously, the above two conditions lead to independent decisions for each symbol index and each code. In order to remove the SI in (A.9), one may use properly revised MIMO detection schemes. Note that the noise $\mathbf{e}_v^{(i)}$ is not i.i.d., and that the covariance is given by

$$E\left(\mathbf{e}_v\mathbf{e}_v^H\right) = \sigma^2\mathbf{G} .$$

For instance, the zero-forcing (ZF) and Maximum-Likelihood (ML) detectors are given, respectively, as

$$\hat{\mathbf{d}}^{(i)} = \mathbf{G}^{-1}\mathbf{e}^{(i)} = \mathbf{d}^{(i)} + \mathbf{G}^{-1}\mathbf{e}_v^{(i)}$$

and

$$\hat{\alpha}^{(i)} = \arg\max_{\alpha}\left\{ 2\cdot\Re\left(\mathbf{d}_\alpha^{(i)H}\cdot\mathbf{e}^{(i)}\right) - \mathbf{d}_\alpha^{(i)H}\cdot G\cdot\mathbf{d}_\alpha^{(i)}\right\}$$

$$(A.10)$$

Numerical results illustrate that a violation of 2) directly causes the CI. It is visible already with a single code when comparing bit error rates using either Barker or Hadamard sequences for the spreading [1].

At first we relax now 2) which causes the CI. With imperfect correlation, we obtain the sufficient statistics vector

$$\mathbf{e}^{(i)}(k) = \sum_{i=1}^{N_{Code}} \mathbf{G}_{ij} \cdot \mathbf{d}^{(j)}(k) + \mathbf{e}_{v}^{(i)}(k)$$

with

$$\mathbf{G}_{ij} = \sum_{l=0}^{L-1} \sum_{\lambda=0}^{L-1} \mathbf{H}_{l}^{H} \cdot \mathbf{H}_{\lambda} \cdot \mathbf{C}_{l\lambda}^{ij} \qquad \text{(A.11)}$$

where

$$\mathbf{C}_{l\lambda}^{ij} = \int_{k \cdot T}^{(k+1)\cdot T + (L-1)\cdot\tau} dt \cdot c^{(i)^{*}}(t - l \cdot \tau) \cdot c^{(j)}(t - \lambda \cdot \tau) \qquad \text{(A.12)}$$

is a fourth-order tensor describing the correlation among the shifted codes. Note that the code tensor is static only when the scrambling sequence has the same period as the spreading code. It is then convenient to stack the sufficient statistics and data vectors for all codes in the vectors

$$\mathbf{E} = [\mathbf{e}^{(1)} \quad \mathbf{e}^{(2)} \quad \dots \quad \mathbf{e}^{(Ncode)}]^{T} \qquad \text{(A.13)}$$

$$\mathbf{D} = [\mathbf{d}^{(1)} \quad \mathbf{d}^{(2)} \quad \dots \quad \mathbf{d}^{(Ncode)}]^{T} \qquad \text{(A.14)}$$

respectively, and to arrange all matrices $\mathbf{G}_{ij}$ in a ($n_r \cdot N_{code} x n_r \cdot N_{code}$) hyper-matrix $\Gamma$ according to the indices $i$ and j. The received signals after the RAKE are then given as

$$\mathbf{E}(k) = \Gamma \cdot \mathbf{D}(k) + \mathbf{E}_{v}(k) \qquad \text{(A.15)}$$

where the noise contribution $\mathbf{E}_{v}(k)$ is formed from $\mathbf{e}_{v}^{(i)}(k)$, similar to (A.13). Hence, when a guard time is used, independent decisions for each symbol interval may still be performed, but no longer for each code. Note that both the SI and the CI are contained in the matrix $\Gamma$. It is composed of the channel coefficients and the code tensor (A.12) both of which are known at the receiver. Consequently, the SI and CI can be jointly removed using the maximum-likelihood decision rule

$$\hat{\alpha} = \arg \max_{\alpha} \left\{ 2 \cdot \Re\left(\mathbf{D}_{\alpha}^{H}\mathbf{E}\right) - \mathbf{D}_{\alpha}^{H}\Gamma\mathbf{D}_{\alpha} \right\} \qquad \text{(A.16)}$$

which becomes complex when the numbers of antennas and codes are large. With some penalty, the linear minimum mean-square error (MMSE) detector

$$\hat{\mathbf{D}}(k) = \mathbf{W} \cdot \mathbf{E}(k)$$

where

$$\mathbf{W} = \mathbf{\Gamma}^H \left( \mathbf{\Gamma}\mathbf{\Gamma}^H + \frac{N_{Tx} \cdot N_{Code}}{SNR} \mathbf{\Gamma}^H \right)^{-1}$$

(A.17)

may be used as proposed in [2], which would be more simple.

In addition, the first condition is now relaxed to realise true conditions in the WCDMA system. The removal of the guard time has an immediate effect on the CMFs already noted above. In (A.7), the term $t - l \cdot \tau - \lfloor (t - l \cdot \tau)/T \rfloor \cdot T$ causes a translation by $k \cdot T + \tau$. When $l = 0$, the original sequence is reproduced. For larger values of $l$, however, the shift points to one of the last chips from the shifted sequence in the previous symbol interval $k-1$. In practice, the CMF can be realized by performing a cyclic shift of the reference sequence by 1 chips to the right. The shifted sequence always falls into the same symbol interval, and so the integration in (A.7) is straight forward with $a = k \cdot T$ and $b = (k+1) \cdot T$.

In order to work out the influence of the ISI after the RAKE, we look at the term $\lfloor (t - \lambda \cdot \tau)/T \rfloor$ in (A.8) and set $k=0$. When $t < \lambda\tau$, $\lfloor (t - \lambda \cdot \tau)/T \rfloor = -1$, i.e. we get ISI from the previous symbol. When $t \geq \lambda\tau$, $\lfloor (t - \lambda \cdot \tau)/T \rfloor = 0$ and all contributions come from the current symbol. So we can reformulate (A.8) as

$$\mathbf{e}^{(i)}(k) = \sum_{j=1}^{N_{Code}} \mathbf{G}_{ij}(k-1) \cdot \mathbf{d}^{(j)}(k-1) + \sum_{j=1}^{N_{Code}} \mathbf{G}_{ij}(k) \cdot \mathbf{d}^{(j)}(k) + \mathbf{e}_\nu^{(i)}(k)$$

(A.18)

which results in an effective channel model with two taps. It is more conveniently written as

$$\mathbf{E}(k) = \mathbf{\Gamma}(k-1) \cdot \mathbf{D}(k-1) + \mathbf{\Gamma}(k) \cdot \mathbf{D}(k) + \mathbf{E}_\nu(k)$$

(A.19)

when the interference matrices $\Gamma(k-1)$ and $\Gamma(k)$ are obtained from the corresponding smaller matrices $\mathbf{G}_{ij}(k-1)$ and $\mathbf{G}_{ij}(k)$ as in (A.11) but using the corresponding tensor elements

$$\mathbf{C}_{l\lambda}^{ij}(k-1) = \int_0^{\lambda\tau} dt \cdot c_l^{(i)*} \left( t - l \cdot \tau - \left\lfloor \frac{t - l \cdot \tau}{T} \right\rfloor \cdot T \right) \cdot c^{(j)} \left( t - \lambda \cdot \tau - (k-1) \cdot T \right)$$

$$\mathbf{C}_{l\lambda}^{ij}(k) = \int_{\lambda\tau}^{T\tau} dt \cdot c_l^{(i)*} \left( t - l \cdot \tau - \left\lfloor \frac{t - l \cdot \tau}{T} \right\rfloor \cdot T \right) \cdot c^{(j)} \left( t - \lambda \cdot \tau - k \cdot T \right)$$

(A.20)

Note the disjoint integration intervals. In the following, we denote the interference matrices in (A.19) by $\Gamma_{-1}$ and $\Gamma_0$. Equation (A.19) states a generalized two-path MIMO channel model in the space-code domain for which well-known MIMO detection techniques may be used, regarding that the noise is colored. Here we use the simplest case where the channel is equalized with a Wiener filter. The filter operates over N+1 sufficient statistics vectors in subsequent symbol intervals, where N denotes the filter order. In general, there is a decision lag $\Theta$ between the currently available sufficient statistics vector and the currently decided data vector. For constructing the filter, we write the channel model in matrix-vector notation

$$\underbrace{\begin{pmatrix} \mathbf{E}(k+\Theta-N) \\ \mathbf{E}(k+\Theta-N+1) \\ \vdots \\ \mathbf{E}(k+\Theta) \end{pmatrix}}_{\tilde{\mathbf{E}}(k)} = \underbrace{\begin{pmatrix} \Gamma_{-1} & \Gamma_0 & 0 & 0 \\ 0 & \Gamma_{-1} & \Gamma_0 & 0 \\ \vdots & \vdots & \vdots & \vdots \\ & & \Gamma_{-1} & \Gamma_0 \end{pmatrix}}_{\tilde{\Gamma}} \cdot \underbrace{\begin{pmatrix} \mathbf{D}(k+\Theta-N-1) \\ \mathbf{D}(k+\Theta-N) \\ \vdots \\ \mathbf{D}(k+\Theta) \end{pmatrix}}_{\tilde{\mathbf{D}}(k)} + \underbrace{\begin{pmatrix} \mathbf{E}_\nu(k+\Theta-N) \\ \mathbf{E}_\nu(k+\Theta-N+1) \\ \vdots \\ \mathbf{E}_\nu(k+\Theta) \end{pmatrix}}_{\tilde{\mathbf{E}}_\nu(k)}$$

The data at the symbol index $k$ are then reconstructed as a linear combination of the current and the previous sufficient

statistics vectors as

$$\mathbf{D}(k) = \mathbf{W} \cdot \widetilde{\mathbf{E}}(k) \qquad . \qquad\qquad (\text{A}.22)$$

The minimum mean-square error solution for **W** is

$$\mathbf{W} = \sigma_{xx}^2 \cdot \widetilde{\mathbf{\Gamma}}_k^H \cdot \left( \widetilde{\mathbf{\Gamma}} \cdot \sigma_{xx}^2 \cdot \widetilde{\mathbf{\Gamma}}^H + \sigma_v^2 \cdot \widetilde{\mathbf{R}} \right)^{-1} . \qquad\qquad (\text{A}.23)$$

The matrix $\widetilde{\Gamma}_k$ in (A.23) contains the columns of the matrix $\widetilde{\Gamma}$ corresponding to the data vector D(k). More precisely, these are the columns with numbers $n_t \cdot N_{Code}(N-\Theta+1)+1$ to $n_t \cdot N_{Code}(N-\Theta+2)$. Note that the noise covariance $\widetilde{\mathbf{R}} = E(\widetilde{\mathbf{E}}_v(k) \cdot \widetilde{\mathbf{E}}_v(k)^H)/\sigma_v^2$ is not i.i.d.. During the calculus of $\widetilde{\mathbf{R}}$, we obtain the elementary matrices

$$E\left( \mathbf{e}_v^{(i)}(\kappa) \cdot \mathbf{e}_v^{(i)}(\theta) \right) = \sigma_v^2 \cdot \left( \mathbf{G}_{ij}(-1) + \mathbf{G}_{ij}(0) \right) \cdot \delta_{\kappa,\theta} \qquad (\text{A}.24)$$

resulting in a quasi-diagonal covariance matrix

$$\widetilde{\mathbf{R}} = \begin{pmatrix} \mathbf{\Gamma}_{-1}+\mathbf{\Gamma}_0 & 0 & .. & 0 \\ 0 & \mathbf{\Gamma}_{-1}+\mathbf{\Gamma}_0 & .. & 0 \\ \vdots & \vdots & \vdots & \vdots \\ 0 & 0 & .. & \mathbf{\Gamma}_{-1}+\mathbf{\Gamma}_0 \end{pmatrix} . \qquad (\text{A}.25)$$

which may not be confused with $\widetilde{\Gamma}$. It is more convenient to write the filter coefficients (A.23) finally as

$$\mathbf{W} = \widetilde{\mathbf{\Gamma}}_k^H \cdot \left( \widetilde{\mathbf{\Gamma}} \cdot \widetilde{\mathbf{\Gamma}}^H + \frac{N_{code} \cdot N_{Tx}}{SNR} \cdot \widetilde{\mathbf{R}} \right)^{-1} \qquad (\text{A}.26)$$

where *SNR* denotes the mean signal-to-noise ratio at one receive antenna.

References

[1] Jack Salz: Digital Transmission over cross-coupled linear channels, AT&T Techn. J., vol. 64, no. 6 (July/Aug. 1985), 1147-1159.

[2] V. Jungnickel, Y.S. Chang and V. Pohl, "Performance of MIMO RAKE receivers in WCDMA systems," Proc. IEEE WCNC 2004, Atlanta, GA (on CD-ROM).

[3] C. B. Papadias, H. Huang, "Linear space-time multiuser detection for multipath CDMA channels" IEEE Journ. Selected Areas Comm., Vol. 19, No. 2, pp. 254-265, 2001.

[4] H. Huang, H. Viswanathan, G. J. Foschini, "Multiple antennas in cellular CDMA systems: Transmission, detection, and spectral efficiency," IEEE Trans. Wireless Comm., vol. 1, no. 3, July 2002 pp. 383-392.

**Claims**

1. Method for reducing interference in a radio communication system, wherein
   a user terminal (MS) is equipped with at least two antennas for receiving at least two signal streams (stream 1, stream 2) using a space-time processing technique.

2. Method according to claim 1, wherein
   the at least two signal streams (stream 1, stream 2) are transmitted via at least two transmit antennas of one or more base stations (BS1, BS2).

3. Method according to claim 2, wherein
   the base stations (BS1, BS2) are synchronised to each other.

4. Method according to claim 2 or 3, wherein
   for distinguishing the at least two signal streams (stream 1, stream 2), orthogonal sequences are added to the signal streams.

5. Method according to one of the preceding claims, wherein the spatial multiplexing is used for an inter-cell handover.

6. Method according to one of the preceding claims, wherein the at least two signal streams (stream 1, stream 2) are transmitted using the same at least one frequency band.

7. Terminal of a radio communication system, comprising at least two antennas, and
   means for receiving at least two signal streams (stream 1, stream 2) using spatial multiplexing.

8. Receiver for a terminal of a radio communication system, comprising means for space-code processing of received signals.

9. Receiver according to claim 8, wherein
   the processing is effected over a number of received symbols.

FIG 1

FIG 2

## FIG 3

## FIG 4

FIG 5

## FIG 6

FIG 7

MIMO 2 Tx, 2 Rx, L=3 RAKE with Wiener Filter behind
filter order ——— N=2 - - - N=8

FIG 8

—△— SI Cancellation with scrambling, Had-16
—□— SI+CI Cancellation [7] w/o scrambling, Had-16
—○— SI+CI+ISI Cancellation w/o scrambling, Had-16
—◇— SI+CI+ISI Cancellation w/o scrambling, Gold-16

EP 1 727 297 A1

**European Patent Office**

**EUROPEAN SEARCH REPORT**

Application Number

EP 05 01 1389

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | JUNGNICKEL V ET AL: "Performance of MIMO rake receivers in WCDMA systems" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 4, 21 March 2004 (2004-03-21), pages 2075-2080, XP010708307 ISBN: 0-7803-8344-3 | 1-7 | H04B7/02 |
| Y | * page 2075, column 1, paragraph 1 - page 2076, column 1, paragraph 1 * * page 2078, column 2, paragraph 2 - page 2080, column 2, paragraph 2 * * figure 1 * ----- | 8,9 | |
| Y | CHEN H ET AL: "A multi-code space-frequency RAKE receiver" SIGNALS, SYSTEMS AND COMPUTERS, 2004. CONFERENCE RECORD OF THE THIRTY-EIGHTH ASILOMAR CONFERENCE ON PACIFIC GROVE, CA, USA NOV. 7-10, 2004, PISCATAWAY, NJ, USA,IEEE, 7 November 2004 (2004-11-07), pages 672-676, XP010779636 ISBN: 0-7803-8622-1 * abstract * * page 672, column 2, paragraph 1 * * page 673, column 1, paragraph 1 - column 2, paragraph 1 * * page 674, column 2, paragraph 4 - page 675, column 2, last paragraph * * figures 1,3 * ----- | 8,9 | |

TECHNICAL FIELDS SEARCHED (Int.Cl.7)

H04B

The present search report has been drawn up for all claims

| Place of search | Date of completion of the search | Examiner |
|---|---|---|
| The Hague | 26 October 2005 | Yang, Y |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JACK SALZ.** Digital Transmission over cross-coupled linear channels. *AT&T Techn. J.,* July 1985, vol. 64 (6), 1147-1159
- **V. JUNGNICKEL ; Y.S. CHANG ; V. POHL.** Performance of MIMO RAKE receivers in WCDMA systems. *Proc. IEEE WCNC,* 2004

- **C. B. PAPADIAS ; H. HUANG.** Linear space-time multiuser detection for multipath CDMA channels. *IEEE Journ. Selected Areas Comm.,* 2001, vol. 19 (2), 254-265
- **H. HUANG ; H. VISWANATHAN ; G. J. FOSCHINI.** Multiple antennas in cellular CDMA systems: Transmission, detection, and spectral efficiency. *IEEE Trans. Wireless Comm.,* July 2002, vol. 1 (3), 383-392